(19) Europäisches Patentamt

European Patent Office

Office européen des brevets

(11) **EP 1 241 817 A1**

## (12) EUROPEAN PATENT APPLICATION
published in accordance with Art. 158(3) EPC

(43) Date of publication:
**18.09.2002 Bulletin 2002/38**

(51) Int Cl.⁷: **H04J 13/04**

(21) Application number: **01972710.6**

(22) Date of filing: **05.10.2001**

(86) International application number:
**PCT/JP01/08832**

(87) International publication number:
**WO 02/032029 (18.04.2002 Gazette 2002/16)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.10.2000 JP 2000307991**

(71) Applicant: **Yozan Inc.
Tokyo 155-0031 (JP)**

(72) Inventors:
• **ZHOU, Changming, c/o YOZAN INC.
Tokyo 155-0031 (JP)**
• **CHEN, Xiao Yuan, c/o YOZAN INC.
Tokyo 155-0031 (JP)**
• **SUZUKI, Kunihiko, c/o YOZAN INC.
Tokyo 155-0031 (JP)**

(74) Representative: **Grünecker, Kinkeldey,
Stockmair & Schwanhäusser Anwaltssozietät
Maximilianstrasse 58
80538 München (DE)**

## (54) RECEIVER

(57) A 3-step cell search type receiver apparatus with an improved accuracy is provided. The receiver apparatus comprises a matched filter MF and sliding correlator unit SC to which a reception signal Sin is inputted. The matched filter MF computes correlation between the reception signal Sin and a primary synchronization code PSC and produces an output Spsc, which is retained in a memory MEM1 and then processed by a timing detection unit TDP. The sliding correlator unit SC comprises a plurality of sliding correlators SC1 to SCq, whose outputs A [1] to A [q] are retained in a memory MEM2 and then processed by a timing group identification unit TGI. The sliding correlator unit SC computes correlation based on the primary and secondary synchronization codes or the secondary synchronization code. In the former case, inphase-addition is performed after performing channel estimation and phase correction, and in the latter case, only inphase-correction is performed.

FIG.2

**Description**

TECHNICAL FIELD

The present invention relates to a receiver apparatus to which a wideband code division multiple access (W-CDMA) communication system can be suitably applied, and more particularly to a receiver apparatus with an improved accuracy of a 3-stage cell search system.

BACKGROUND ART

The wideband code division multiple access (W-CDMA) system on which increasing attention has been focused in the field of mobile communications in recent years requires a great amount of time for cell search, due to computations for initial synchronization and identification of a base station during cell search. A 3-stage cell search system has been proposed, whereby scrambling codes for identifying the base stations are divided into groups and a secondary synchronization code (search code) for identifying the groups is set to speed up cell search (See "Institute of Electronics, Information and Communication Engineers Transaction" B, September 2000, Vol.J83-B, No. 9, pp. 1245-1257).

DISCLOSURE OF THE INVENTION

While the conventional 3-stage cell search system employs amplitude information in a reception signal in utilizing correlation results, it does not utilize phase information, and a sufficient level of accuracy cannot be obtained. The present invention has been made against such background, and has as its object the provision of a receiver apparatus in which cell search accuracy of the 3-stage cell search system is improved.

A receiver apparatus according to the present invention comprises first correlation means for computing correlation between a primary synchronization code common to a plurality of base stations and a reception signal, and slot identification means for identifying slot synchronization by inphase-adding the result of correlation over a plurality of adjacent slots at slot intervals and calculating power.

A receiver apparatus according to the present invention comprises second correlation means for computing correlation between a secondary synchronization code comprising a plurality of codes for identifying a scrambling code group and a reception signal for each slot in synchronization with identified slot synchronization, and first frame identification means for identifying frame synchronization and a scrambling code group by inphase-adding the result of correlation for each slot and calculating power.

This allows the frame synchronization and scrambling code group to be identified by utilizing phase information in the result of correlation.

A receiver apparatus according to the present invention comprises first correlation means for computing correlation between a primary synchronization code common to a plurality of base stations and a reception signal, second correlation means for computing correlation between a secondary synchronization code comprising a plurality of codes for identifying a scrambling code group and the reception signal for each slot in synchronization with the slot synchronization identified by the first correlation means, and second frame identification means for identifying frame synchronization and a scrambling code group by performing channel estimation and phase correction based on the result of correlation by the first correlation means and the result of correlation by the second correlation means, inphase-adding the phase-corrected correlation result for each slot, and calculating power.

This allows the frame synchronization and scrambling code group to be identified after phase correction based on the phase information of the result of correlation with the primary synchronization code and with the secondary synchronization code.

A receiver apparatus according to the present invention comprises second correlation means for computing correlation between a secondary synchronization code comprising a plurality of codes for identifying a scrambling code group and a reception signal for each slot in synchronization with identified slot synchronization, and third frame identification means for identifying frame synchronization and a scrambling code group by performing channel estimation and phase correction based on the result of correlation, inphase-adding the phase-corrected correlation result for each slot, and calculating power.

This allows the frame synchronization and scrambling code group to be identified after phase correction based on the phase information in the correlation result.

A receiver apparatus according to the present invention comprises second correlation means for computing correlation between a secondary synchronization code comprising a plurality of codes for identifying a scrambling code group and a reception signal for each slot in synchronization with identified slot synchronization, and fourth frame identification means for identifying frame synchronization and a scrambling code group by generating a matrix of the

**EP 1 241 817 A1**

number of codes in the secondary synchronization code times the number of slots in a single frame as a result of correlation, and adding together elements of the matrix for each known combination pattern representing each scrambling code group.

This allows the frame synchronization and scrambling code group to be identified by a simple calculation based on the matrix and by utilizing the phase information in the correlation result.

The fourth frame identification means may identify frame synchronization and the scrambling code group by inphase-adding the elements in adjacent slots in the matrix and calculating power, so that the frame synchronization and scrambling code group can be identified by a simpler computation.

A receiver apparatus according to the present invention comprises third correlation means for computing correlation between a scrambling code of an identified scrambling code group and a reception signal at identified frame synchronization, and scrambling code identification means for identifying a scrambling code by inphase-adding the result of correlation over a plurality of symbols and calculating power.

This enables the scrambling code to be identified by utilizing the phase information in the correlation result.

The scrambling code identification means may identify the scrambling code by, in an initial cell search, calculating power based on the result of correlation and adding the power over a plurality of symbols, and by, in a periphery cell search, inphase-adding the result of correlation over a plurality of symbols and calculating power. Thus, the phase information in the correlation results can be selectively utilized during periphery cell search which requires a higher degree of accuracy, while performing computations faster by a simple calculation during initial cell search.

This specification includes part or all of the contents as disclosed in the specification and/or drawings of Japanese Patent Application No. 2000-307991, which is a priority document of the present application.

BRIEF DESCRIPTION OF THE DRAWINGS

Fig. 1 shows a conceptual diagram illustrating the frame structure of a transmission signal in a 3-step cell search system which is to be processed by a receiver apparatus according to an embodiment of the present invention.
Fig. 2 shows a block diagram of the structure of the receiver apparatus according to the embodiment of the present invention.
Fig. 3 shows a graph plotting an output of a matched filter in the embodiment.
Fig. 4 shows a block diagram of the structure of the matched filter in the embodiment.
Fig. 5 shows a block diagram of the structure of a sliding correlator unit in the embodiment.
Fig. 6 shows a block diagram of the structure of a single sliding correlator in the sliding correlator unit in the embodiment.
Fig. 7 shows a block diagram of the structure of a matrix stored in a first memory in the embodiment.
Fig. 8 shows a functional block diagram illustrating the processes performed in the sliding correlator unit and a timing group identification unit TGI in the embodiment.
Fig. 9 shows a matrix of an output of a power averaging unit in the embodiment.
Fig. 10 shows a block diagram illustrating the state where correlation computation is performed in the sliding correlator unit in the embodiment using a second search code.
Fig. 11 shows a flowchart of a first step of cell search in the embodiment.
Fig. 12 shows a flowchart of a second step of cell search in the embodiment.
Fig. 13 shows a flowchart of a third step of cell search in the embodiment.
Fig. 14 shows an example of a program for calculating a cumulative sum of correlation power and its absolute value in the embodiment.
Fig. 15 shows a block diagram of the structure of a receiver apparatus according to a second embodiment of the present invention.
Fig. 16 shows a functional block diagram illustrating the processing performed between a sliding correlator unit and a timing group identification unit in the second embodiment.
Fig. 17 shows a flowchart of a second step in the second embodiment.
Fig. 18 shows a block diagram of the structure of a receiver apparatus according to a third embodiment of the present invention.
Fig. 19 shows a flowchart of a first step in the third embodiment.
Fig. 20 shows a block diagram of the structure of a receiver apparatus according to a fourth embodiment of the present invention.

EXPLANATION OF REFERENCE SIGNS

| | | |
|---|---|---|
| GC [j,k] (j=1-p, k=1-w) | scrambling code |
| SCMG [g] (g=1-p) | scrambling code group |
| PSC | primary synchronization code |
| SSC [u] (u=1-q) | secondary synchronization code |
| MF | matched filter |
| SC | sliding correlator unit |
| SC1-SCq | sliding correlator |
| TDP | timing detection unit |
| CAP, CAP1 | inphase addition unit |
| PWA, PWA1, PWA2 | power calculation/ averaging unit |
| JP1, JP2 | judgement unit |
| TGI | timing/ group identification unit |
| Tp2 | second reception timing |
| PSth | peak |

BEST MODE OF CARRYING OUT THE INVENTION

Preferred embodiments of the present invention will be hereafter described by referring to the attached drawings.

[First Embodiment]

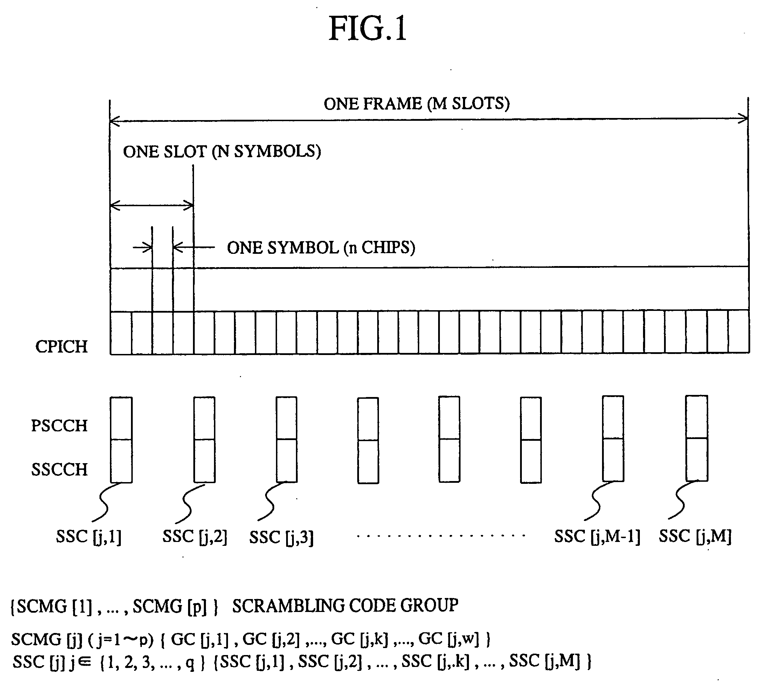

Fig. 1 shows a conceptual diagram of the frame structure of a transmission signal in a 3-stage cell search system which is to be processed by a receiver apparatus according to an embodiment of the present invention.

In the 3-step cell search system, a pilot pattern of a common pilot channel (CPICH) is denoted by CPI, a primary synchronization code (search code) common to all base stations is denoted by PSC, scrambling codes identifying base stations are denoted by GC [j,k] (j=1-p, K=1-w), a plurality of scrambling code groups including these scrambling codes are denoted by SCMG [g] (g=1-p) and a secondary synchronization code (search code) for identifying each scrambling code group is denoted by SSC [u] (u=1-q). Each scrambling code group is identified by a combination of secondary synchronization codes.

In Fig. 1, the length of one frame is M [slots/frame] $\times$ N [symbols/slot] $\times$ n [chips/symbol], and correlation is computed by the primary synchronization code PSC and secondary synchronization code SSC [u] at a number M of reception timings (which corresponds to the number of slots) within a single frame.

The modulation mode of the transmission signal is QPSK (Quadrature Phase Shift Keying), and the transmission signal comprises an inphase component (I-component) and a quadrature component (Q-component).

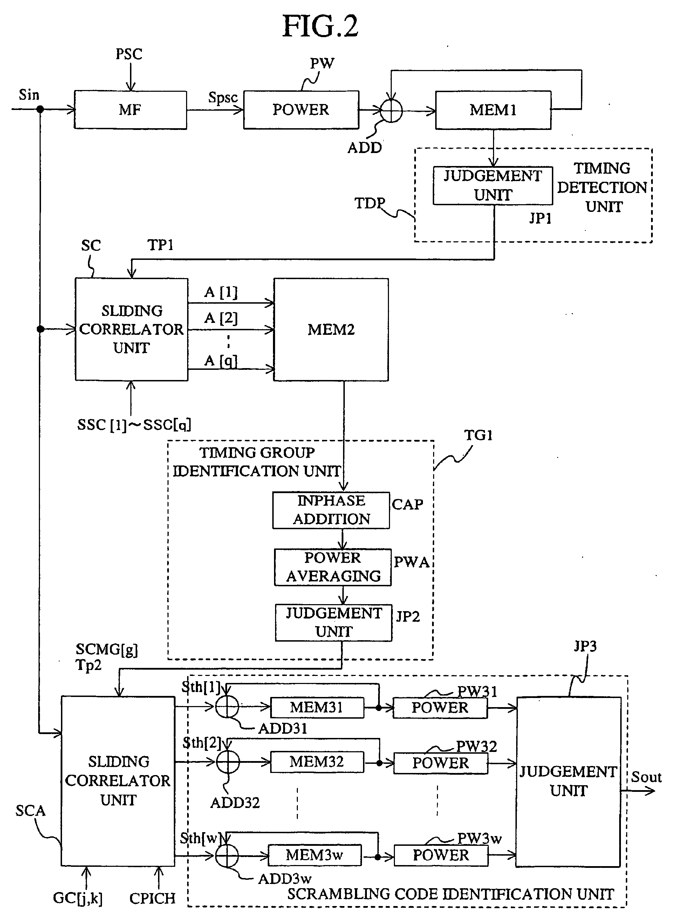

Fig. 2 shows a block diagram of the structure of a receiver apparatus according to the embodiment of the present invention. There are provided a matched filter MF and sliding correlator unit SC to which a reception signal Sin is inputted. The reception signal Sin is complex data comprising an inphase component (I-component) Sin I and a quadrature component (Q-component) Sin Q.

The matched filter MF computes correlation between the reception signal Sin and the primary synchronization code PSC. An output Spsc is inputted to a power calculation unit PW, which outputs power of the correlation computation (correlation electric power). After retained in a memory MEM 1, the output power is processed in a timing detection unit TDP. The memory MEM 1 has a capacity for one slot, and, together with a previous-stage adder ADD, cumulatively adds the power output of the correlation computation in units of slot. The output Spsc is complex data comprising an I-component SpscI and a Q-component SpscQ.

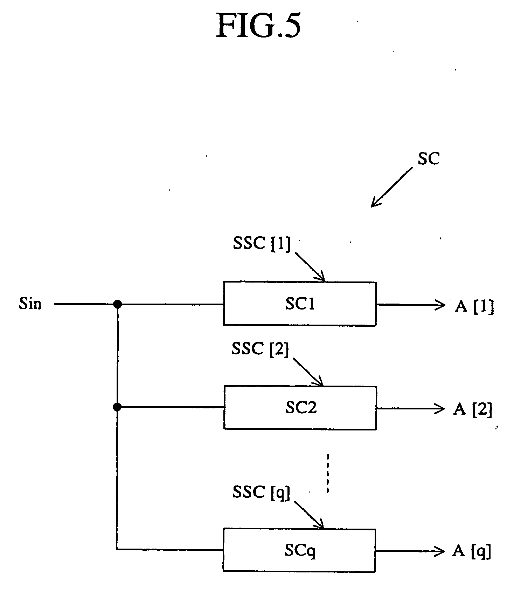

The sliding correlator unit SC comprises a plurality of sliding correlators SC1 to SCq (see Fig. 5), and their outputs A [i] (i=1-q) are retained in a memory MEM2 and then processed by a timing group identification unit TGI.

The memory MEM1 retains a single slot worth of the output of the adder ADD. In an initial state, the memory MEM1 feeds the power back to the adder ADD after retaining it for the period of one slot. Thereafter, the adder ADD adds to the addition result the power of one slot period sequentially, thereby cumulatively adding together the power of one-slot period. The period of cumulative addition is one slot (two powers of one slot period) or a plurality of slots.

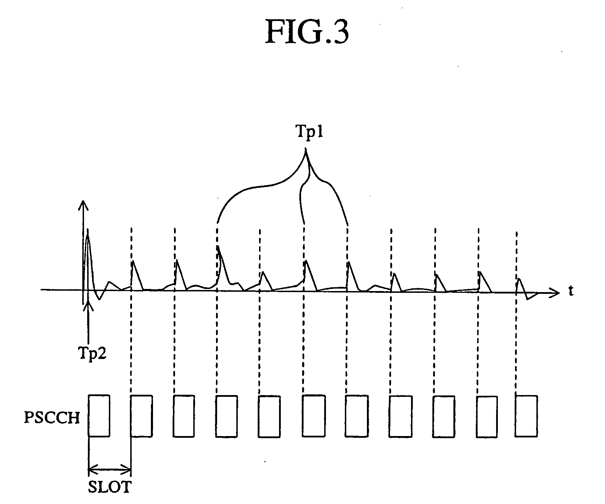

The magnitude of power varies as shown in Fig. 3. After cyclic and cumulative additions at slot intervals, the magnitudes of the power are compared in the judgement unit JP1 of the timing detection unit TDP, whereby peaks and first reception timings Tp1 are detected. The first reception timing Tp1 provides the start point of a single slot in Fig.

1, so that slot synchronization can be detected. The peaks are produced at the timings of the primary synchronization code PSC (synchronization channels), as shown together with the primary synchronization codes PSC in Fig. 3.

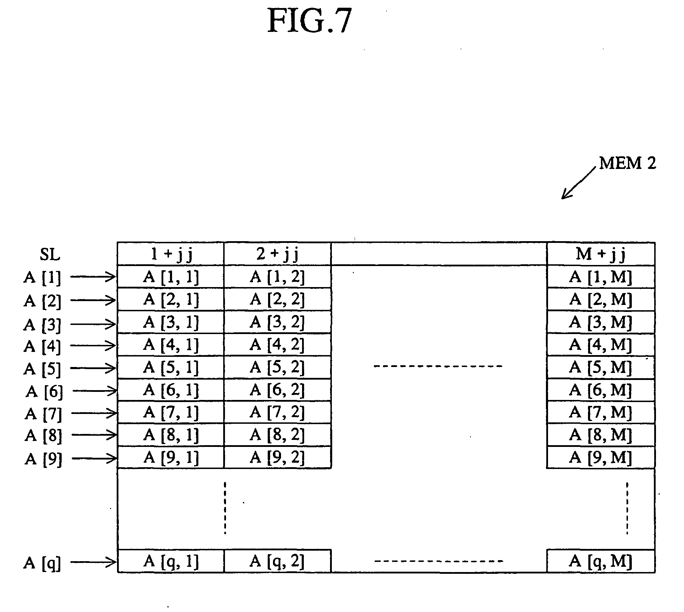

The first reception timings Tp1 are inputted to the sliding correlator unit SC, whereby the reception timings of the sliding correlators SC1 to SCq are set. The sliding correlators SC1 to SCq each perform a correlation computation between the secondary synchronization code SSC [1] to SSC [q] and the reception signal Sin over a single frame, and their outputs A [1] to A [q] are stored in a memory MEM2 as a matrix A [i,j] (i=1-q, j=1-M) (see Fig. 7). The matrix A [i, j] is complex data comprising an I-component AI [i,j] and a Q-component AQ [i,j].

In the timing group identification unit TGI, an inphase addition unit CAP performs inphase addition of the elements of the matrix with reference to known secondary synchronization code combination patterns SSC [j,Kgj] (j=1-M, Kgj∈{1-q}) representing individual scrambling code groups SCMG [g] (g∈{1-p}). Based on the result of this inphase addition, a power averaging unit PWA calculates average values of the power. By selecting the maximum of the average values of the power, the judgement unit JP2 identifies a single scrambling code group SCMG [g] and the second reception timing Tp2. The second reception timing Tp2 provides a start point of the frame, so that frame synchronization can be detected.

Then, with regard to the scrambling codes GC [g,i] (i=1-w) included in the identified scrambling code group SCMG [g], a sliding correlator unit SCA computes correlation between the reception signal Sin and the scrambling codes GC [g,i], and further performs a complex conjugate computation between the reception signal Sin and a pilot pattern of a common pilot channel CPICH in order to remove modulation effects by the common pilot channel CPICH for an inphase addition between symbols. Adders ADD31 to ADD3w are connected to the output of the sliding correlator unit SCA, and the outputs of adders ADD31 to ADD3w are further connected to memories MEM31 to MEM3w, respectively. Outputs of the memories MEM31 to MEM3w are each fed back to the adders ADD31 to ADD3w, whereby the result of correlation computation in the sliding correlator unit SCA is cumulatively added individually for the inphase component (I-component) and quadrature component (Q-component) over a plurality of symbols. The outputs of the memories MEM31 to MEM3w are connected to power calculation units PW31 to PW3w, respectively, where average values of power of the result of the cumulative addition are calculated. The outputs of the power calculation units PW31 to PW3w are connected to a judgement unit JP3, where the maximum of the average values of power is selected. Thus, the judgement unit JP3 identifies one of the scrambling codes GC [g,1] to GC [g,w].

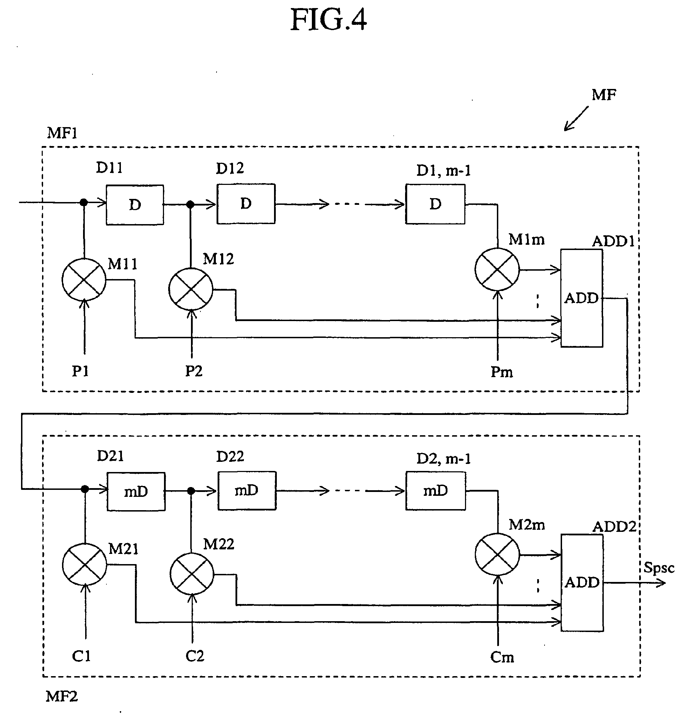

Fig. 4 shows a block diagram of the structure of the matched filter MF in the present embodiment. The matched filter MF, which performs a fast correlation of hierarchical correlation sequence, comprises matched filters MF1 and MF2 connected in series. The matched filter MF1 comprises a number m of multiplication circuits M11 to M1m, delay circuits D11 to D1, m-1 whereby the reception signal Sin is successively delayed and inputted to the multiplication circuits M12 to M1m, and an addition circuit ADD1 for summing the outputs of the multiplication circuits M11 to M1m.

On the other hand, the matched filter MR2 comprises a number m of multiplication circuits M21 to M2m, delay circuits D21 to D2, m-1 by which the output of the matched filter MF1 is sequentially delayed and inputted to the multiplication circuits M22 to M2m, and an adder circuit ADD2 for summing the outputs of the multiplication circuits M21 to M2m.

When the reception signal Sin is expressed by Sin (i) as a discrete time series signal, the output Spsc of the matched filter MF is expressed by Equation (1). The primary synchronization code PSC is a hierarchical correlation sequence and comprises a sequence P [i] (i=1-m) and a sequence C [i] (i=1-m). While the periods of the sequence P [i] and sequence C [i] are described as identical, they may be different from one another.

$$Spsc = \sum_{i=j}^{k \times m + j} \{Sin(i) \times P(((i+j) \bmod m) + 1) \times C(((i+j) \operatorname{div} m) + 1)\} \qquad (1)$$

wherein j=1, 2, ..., and K=1, 2, ....

While the present embodiment is based on a hierarchical structure, matched filters of other arbitrary structures may also be used.

Fig. 5 shows a block diagram of the structure of the sliding correlator unit SC in the present embodiment. A plurality of sliding correlators SC1 to SCq are connected in parallel against a reception signal Sin. In the individual sliding correlators SC1 to SCq, correlation is computed between q kinds of the secondary synchronization codes SSC [1], SSC [2], ..., SSC [q] and the reception signal Sin.

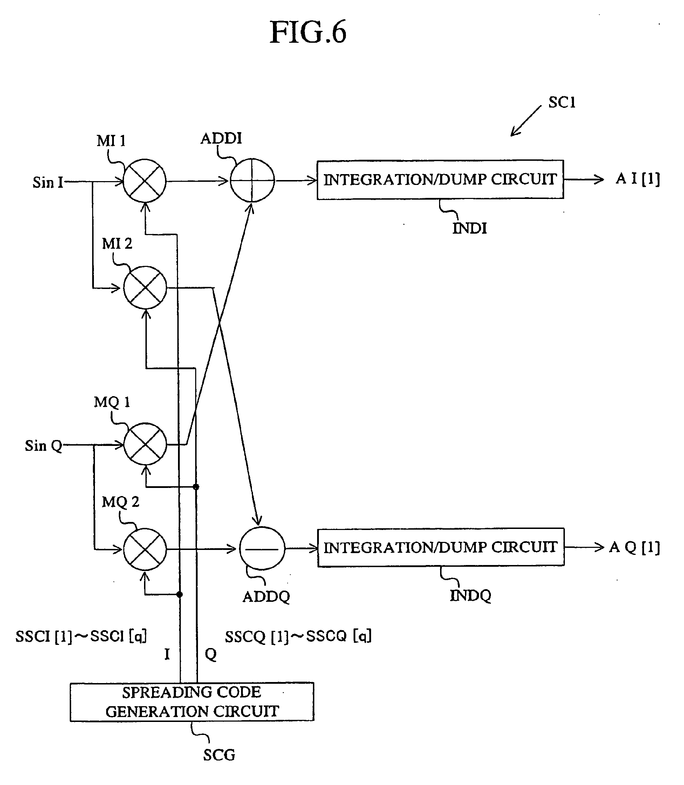

Fig. 6 shows the structure of a single sliding correlator in the sliding correlator unit in the present embodiment. A sliding correlator SC1 performs a correlation computation with respect to the inphase component SinI and quadrature component SinQ of the reception signal individually.

The sliding correlator SC1 comprises a multiplication circuit MI1 and a multiplication circuit MI2 for the I-component SinI of the reception signal. The multiplication circuit MI1 successively multiplies the time-series reception signal SinI with the I-components SSCI [1] to SSCI [q] of the individual secondary synchronization codes SSC [1] to SSC [q]. The multiplication circuit MI2 successively multiplies the time-series reception signal SinI with the Q-components SSCQ [1] to SSCQ [q] of the individual secondary synchronization codes SSC [1] to SSC [q].

The sliding correlator SC1 further comprises multiplication circuits MQ1 and MQ2 for the Q-component SinQ of the reception signal. The multiplication circuit MQ1 successively multiplies the time-series reception signal SinQ with the Q-components SSCQ [1] to SSCQ [q] of the individual secondary synchronization codes SSC [1] to SSC [q]. The multiplication circuit MQ2 successively multiplies the time-series reception signal SinQ with the I-components SSCI [1] to SSCI [q] of the individual secondary synchronization codes SSC [1] to SSC [q]. The outputs of the multiplication circuits MI1 and MQ1 are added up in an addition circuit ADDI, whose output is inputted to an integration/dump circuit INDI where a correlation computation result AI [1] is calculated. The outputs of the multiplication circuits MQ2 and MI2 are subtracted in a subtraction circuit ADDQ, whose output is then input to the other integration/dump circuit INDQ where a correlation computation result AQ [1] is calculated.

The secondary synchronization code is generated in a spreading code generation circuit SCG.

Fig. 7 shows a block diagram of the structure of the matrix stored in the memory MEM2. Outputs A [1] to A [q] are stored in the memory MEM2 in a time series. In the case of the output A [I], for example, a number M (=the number of slots in a single slot) of complex data A [1, 1] to A [1, M] are stored. In-phase addition of the elements of the matrix is performed in adjacent slots according to predetermined combinations, and a higher-accuracy reception timing is identified while identifying the scrambling code group. The number of rows in the matrix of Fig. 7 is the same as the number (q) of the secondary synchronization codes, and the number of columns is the same as the number (M) of slots in a single frame.

A first algorithm in a second step of the cell search will be described. Correlation power is determined on the basis of the I- and Q-components of each element (complex data) of the matrix of Fig. 7, and correlation power for a single frame (M number of slots) is cumulatively added in the order of the scrambling code groups and in accordance with the predetermined combination of the secondary synchronization codes (one secondary synchronization code for each slot) which specifies the scrambling code group.

Based on the I-component and Q-component of the element A [i,j] as AI [i,j] and AQ [i,j], respectively, and its power PW[i,j], PW [i,j] can be expressed by the equation (2);

$$PW[i,j] = (AI[i,j])^2 + (AQ[i,j])^2 \qquad (2)$$

In the predetermined combination SSC [j,Kgj] of the secondary synchronization codes for identifying the scrambling code group SCMG [g] (g∈{1-p}), i.e., in a j-th slot (j=1-M), when the power is cumulatively added according to a combination using the Kgj-th (Kgj∈{1-q}) secondary synchronization codes, the result RPWg of cumulative addition of correlation power is determined by the equation (3);

$$RPW_g = \sum_{j=1}^{M} PW[\text{Kgj}, \text{j}] \qquad (3)$$

The element A [i, j] that is read into the memory MEM2 does not necessarily begin from an element corresponding to the head of the combination of the secondary synchronization codes. Accordingly, the combination of the secondary synchronization code is judged by giving a shift amount (jj) to the slot, as indicated by SL=(1+jj), (2+jj),..., (M+jj) in Fig. 7 and using these as numbers modulo M.

Specifically, for each of the scrambling code groups SCMG [1] to SCMG [p], the component corresponding to the combination of the relevant secondary synchronization codes is shifted by the shift amount (jj) for each slot, and the same computation is performed for all of the slot phase. Namely, M kinds of cumulative correlation power are determined for the same scrambling code group.

The above processing is performed on all of the scrambling code groups SCMG [1] to SCMG [p], and a maximum cumulative correlation power is obtained to identify the scrambling code group SCMG [g]. Further, based on the shift amount of the combination of the secondary synchronization codes having the maximum cumulative correlation power, the head slot of the frame can be detected. Also, based on the shift amount (jj), frame synchronization (second reception timing Tp2) is given.

In addition to the above first algorithm, the first embodiment of the present invention proposes the following processing algorithm (second algorithm) for an enhanced accuracy in the detection of the scrambling code group and frame synchronization.

Relevant elements (complex data) are taken out of the matrix of Fig. 7 in the order of the scrambling code groups and in accordance with the predetermined combination of the secondary synchronization codes identifying the scrambling code group, and are cumulatively added (inphase addition) individually for the I- and Q-components of at least two adjacent slots. The resultant correlation power is determined, and the correlation power by inphase addition of a single frame is cumulatively added. When correlation power of two slots is cumulatively added, the number of correlation power is M/2, and when correlation power of more than 2 slots is cumulatively added, the number of correlation power is smaller than M/2.

The result of cumulative addition of correlation power in the scrambling code group SCMG [g] is determined by the following equation (4), which shows an example of inphase addition of adjacent slots:

$$PW_g = \sum_{t=1}^{M/2}\left(\sum_{j=2t-1}^{2t} AI[Kgj, j]\right)^2 + \sum_{t=1}^{M/2}\left(\sum_{j=2t-1}^{2t} AQ[Kgj, j]\right)^2 \qquad (4)$$

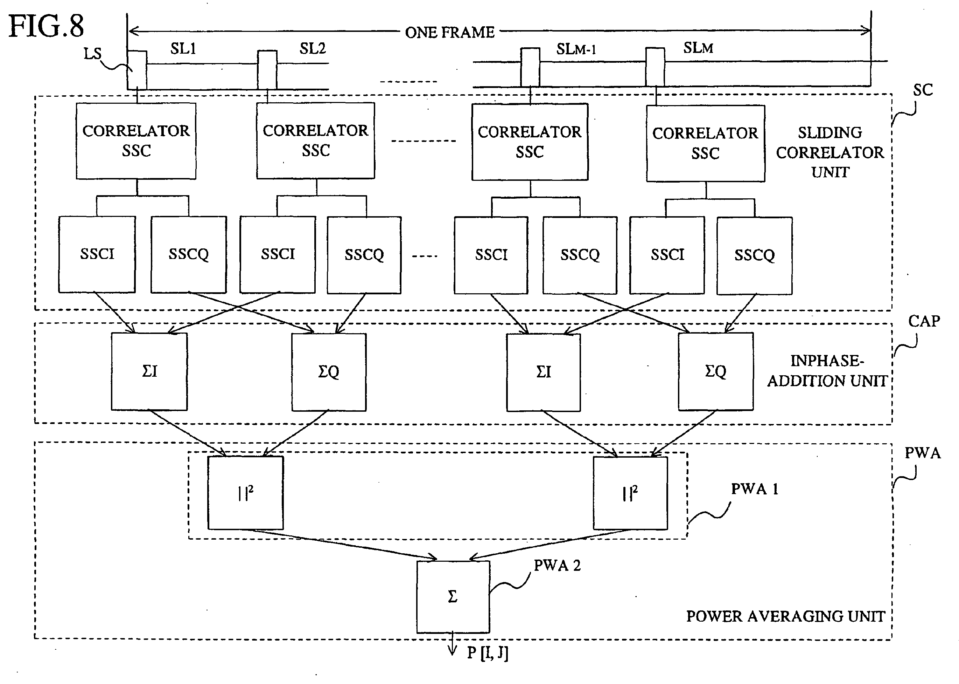

For each of the scrambling code groups SCMG [1] to SCMG [p], the combination component of the secondary synchronization codes is shifted for each slot, and a similar computation is performed for all of the slot phases. Such processing is performed with respect to all of the scrambling code groups SCMG [1] to SCMG [p], the maximum cumulative correlation power is determined, and the scrambling code group SCMG [g] is identified. Further, the head slot (frame synchronization) is detected on the basis of the shift amount of the combination of the secondary synchronization codes SSC [g,1] to SSC [g,q] that has the maximum cumulative correlation power, as well as the conventional algorithm. When a search is to be conducted over more than one frame, the above-described processing within a single frame can be repeated. The algorithm for the present embodiment will be described by referring to a block diagram shown in Fig. 8.

Fig. 8 shows a functional diagram illustrating the processing performed in the sliding correlator unit and timing group identification unit TGI in the present embodiment. Correlation computation in the sliding correlator unit SC is performed at a symbol LS at the head of each slot SL1, SL2, SLj, SLj+1, ..., SLM within a single frame. The result of correlation computation is inphase-added for continuous two slots by the inphase addition unit CAP. After power calculation is performed in the power averaging unit PWA (indicated by PWA1), an average value P [I, J] is calculated (indicated by PWA2).

Since phase rotation by fading changes little during adjacent slots, inphase addition can be performed between adjacent slots without performing phase correction, thereby suppressing the influence of noise.

It will be readily understood that the number of slots for inphase addition may be more than two.

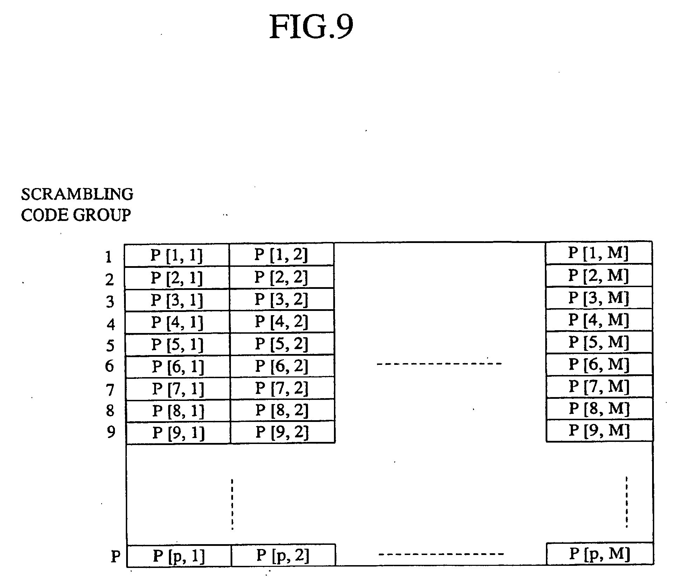

Fig. 9 shows a matrix of the output of the power averaging unit in the present embodiment. The number of rows in the matrix shown in Fig. 9 is equal to the number of scrambling code groups (p), and the number of columns is equal to the number of slots (M) in a single frame. As indicated by Equation (4), the sum of correlation output power of the combination pattern of the secondary synchronization codes SSC [1] to SSC [q] representing each scrambling code group SCMG [g] is calculated from the matrix of Fig. 7 according to the procedure shown in Fig. 8. Further, with respect to the combination pattern of the secondary synchronization codes SSC [g,i] corresponding to the same scrambling code group SCMG [g], the sum of correlation output power when the head slot LS is shifted for each slot SL1 to SLM is determined in a similar manner.

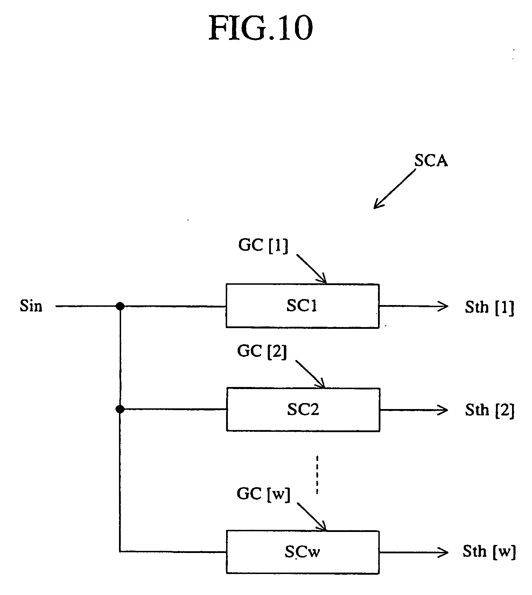

Thereafter, as shown in Fig. 10, correlation between the reception signal Sin and the scrambling codes GC [g,1] to GC [g,w] included in the scrambling code group SCMG [g] is computed. When the number w of the scrambling codes is not more than the number of the sliding correlators, GC [g,l] to GC [g,w] are set in the sliding correlators SC1 to SCw, as shown. When w is greater than the number of the sliding correlators, correlation computation is performed by sequentially changing the scrambling codes GC [g,1] to GC [g,w].

The structure of each of the sliding correlators SC1 to SCw included in the sliding correlator unit SCA is the same as that of the above-mentioned sliding correlator unit SC, so that its description is omitted here. It should be noted, however, that the outputs of the sliding correlator unit SCA are Sth [1] to Sth [w] (complex correlation output) as shown in Figs. 10 and 2.

As shown in Fig. 2, with respect to the common pilot channel by the scrambling codes GC [g,1] to GC [g,w], the correlation computation outputs Sth [I] to Sth [w] are cumulatively added individually for the I- and Q-components over a plurality of symbols.

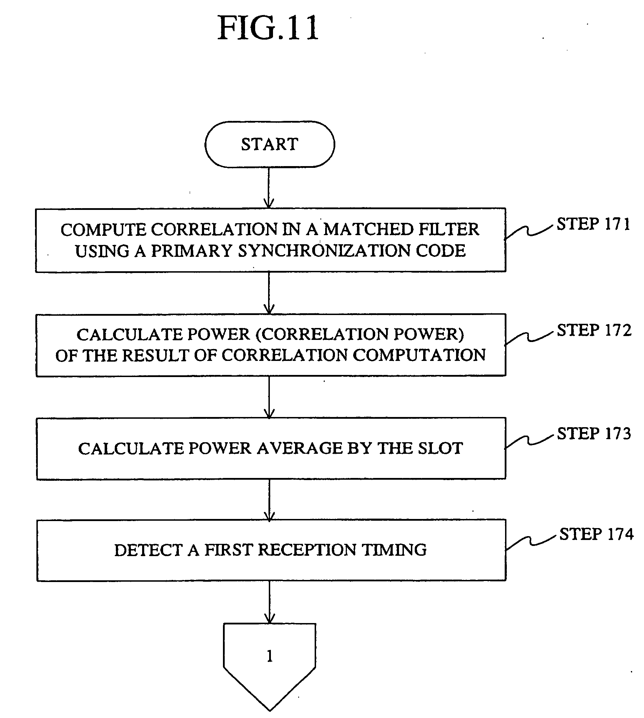

Figs. 11 to 13 show flowcharts illustrating the processing of the above-described cell search.

Fig. 11 shows a first step corresponding to the processing performed by the matched filter MF and timing detection unit TDP of Fig. 2. The first step comprises the following four steps of STEP171 to STEP174.

[STEP171] Correlation is computed between the reception signal Sin and the primary synchronization code PSC by the matched filter MF.

[STEP172] Power (correlation power) of the result of correlation computation is determined by the power calculation unit PW.

[STEP173] A power average of slot periods is calculated over at least one slot (including one slot).

[STEP174] After storing the power average in the memory MEM1, the first reception timing Tp1 is detected by the judgment unit JP1 in the timing detection unit TDP.

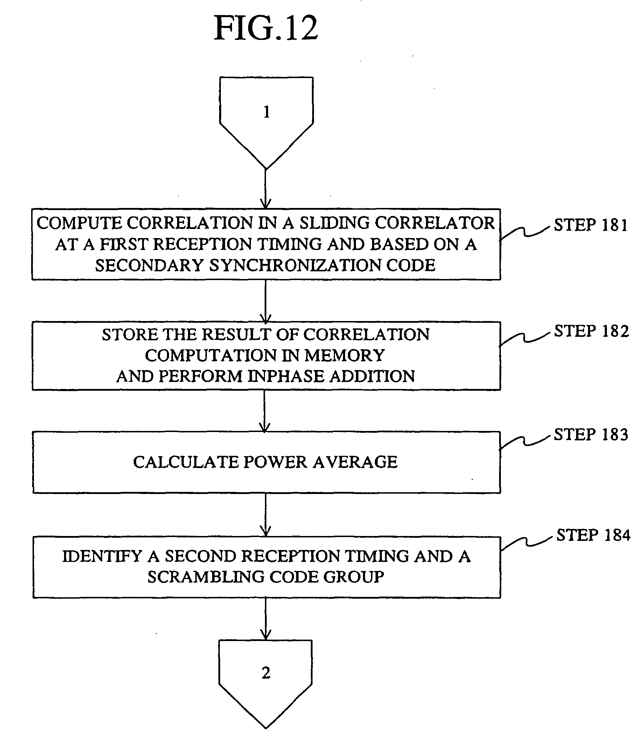

Fig. 12 shows a second step corresponding to the processing performed in the sliding correlator unit SC and timing group identification unit TGI of Fig. 2. The second step comprises the following four steps of STEP181 to STEP184.

[STEP181] Correlation computation is performed between the reception signal Sin and all of the secondary synchronization codes SSC [1] to SSC [q] for each slot by the sliding correlators SC1 to SCq at the first reception timing Tp1.

[STEP182] Inphase addition of the result of correlation computation is performed by an inphase addition unit CAP in the timing group identification unit TGI.

[STEP183] An average value of the power of the result of inphase addition is calculated by a power averaging unit PWA in the timing group identification unit TGI.

[STEP184] The second reception timing Tp2 is identified by the judgement unit JP2 in the timing group identification unit TGI, and simultaneously the scrambling code group SCMG [g] is identified.

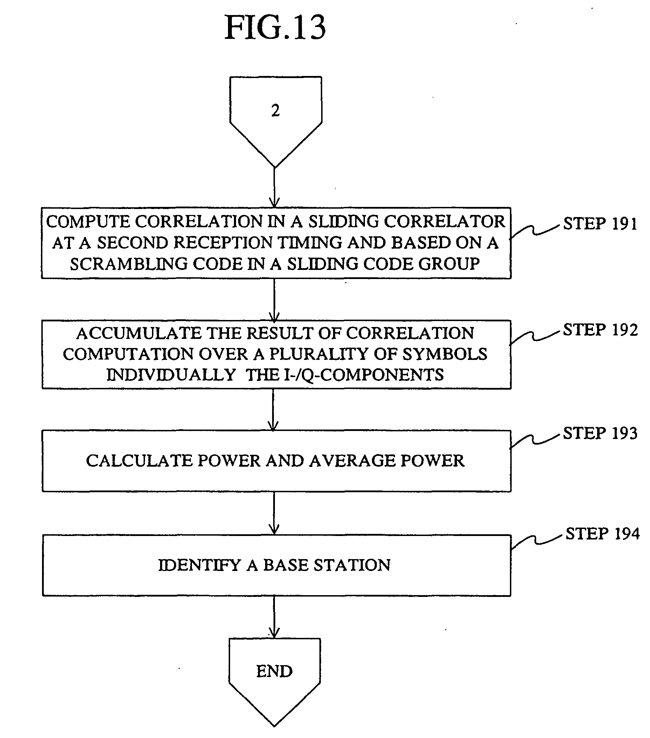

Fig. 13 shows a third step corresponding to the processing in the sliding correlator unit SCA and scrambling code identification unit of Fig. 2. The third step comprises the following four steps of STEP191 to STEP194.

[STEP191] Correlation is computed between the reception signal Sin and the scrambling codes in the scrambling code group and the pilot pattern of the common pilot channel at the second reception timing Tp2 by the sliding correlator unit SCA.

[STEP192] The result of correlation computation is cumulatively added individually for the I- and Q-components over a plurality of symbols.

[STEP193] The power and its average value of the result of cumulative addition is calculated.

[STEP194] The scrambling codes (base station) are identified by the judgement unit JP3.

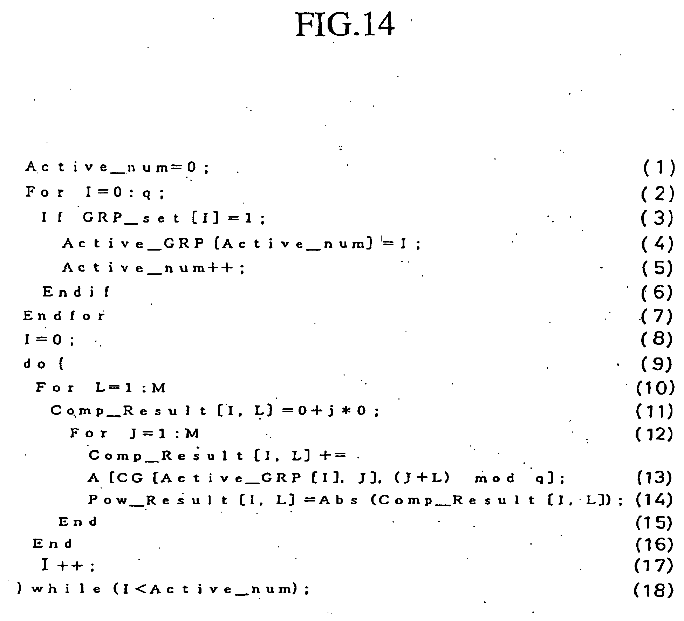

Fig. 14 shows an example of the program for performing the processing indicated by STEP191 of Fig. 13 and Equation (4).

In this program, the number of those groups of the entire scrambling code groups for which correlation computation is to be actually performed is denoted by Active_num, and Active_num is initialized to "0" in row (1). When the number of scrambling code groups for which correlation computation is to be performed is I, the element (flag) of a column GRP_set [I] is set to "1". The number of the scrambling code group for which correlation computation is to be performed is expressed by a matrix Active_GRP []. During an initial cell search, the entire groups are searched, while during a peripheral cell search, only part of the groups is searched based on association with base stations with which communications existed prior to the search. By the setting of the flag in GRP_set [I], the present program can deal with both initial cell search and peripheral cell search.

Rows (2) and (7) of the program indicate a repetition processing for all the q scrambling code groups. Rows (3) and (6) judge whether GRP_set [I] is "1" or not. When "1", the scrambling code group number is substituted in Active_GRP [] in row (4). Simultaneously, Active_num is incremented in row (5).

In row (8), loop counter I is initialized to "0". By the repetition processing in rows (9) and (18), correlation power is cumulatively added and its power is calculated as long as I<Active_num is true.

In rows (10) and (16) and rows (12) and (15), cumulative addition for M slots is specified, and in row (13) the complex data of correlation power is cumulatively added. CG [Active_GRP [i], J] in row (13) is a variable specifying the rows in the combination pattern of the matrix A [] in each of the scrambling code groups. In row (14), an absolute value of the complex data of the result of cumulative addition is calculated. In row (17), the loop counter I is incremented.

The above program can be applied to both the initial cell search and peripheral cell search depending on the setting of the flag in GRP_set [], whereby a high program efficiency is realized.

[Second Embodiment]

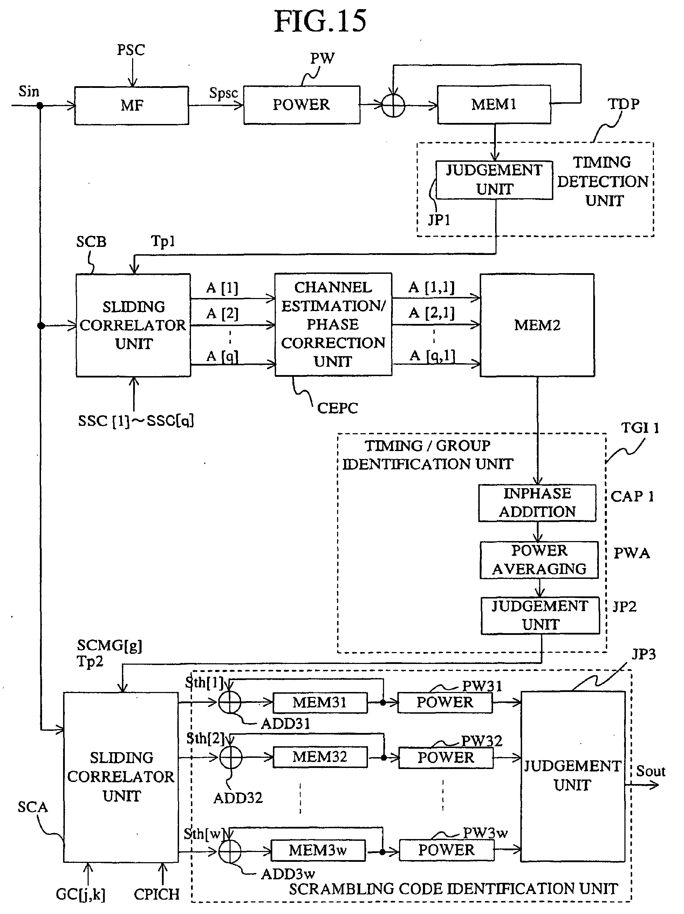

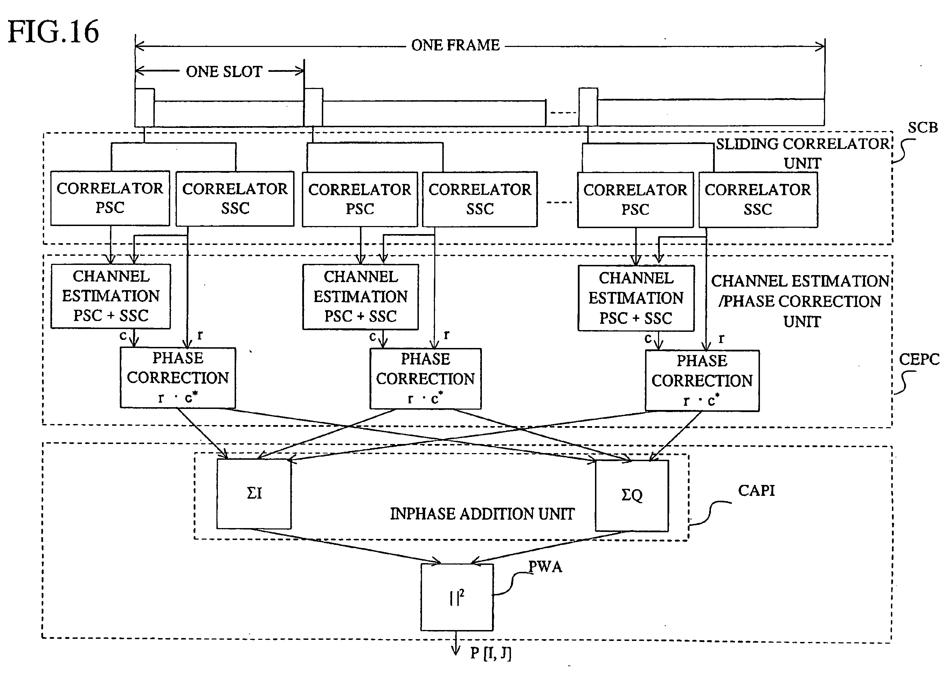

Figs. 15 and 16 show a block diagram and a functional block diagram, respectively, of a receiver apparatus according to a second embodiment of the present invention.

In the second embodiment, correlation computation is performed by the primary synchronization code PSC and the entire secondary synchronization codes SSC [1] to SSC [q] in second step. Further, channel estimation is performed based on the result of correlation computation by the first and second synchronization codes, and phase correction is performed on the result of correlation computation by the secondary synchronization code.

In Fig. 15, a reception signal Sin comprising the I- and Q-components is inputted to a matched filter MF, sliding correlator unit SCB, and sliding correlator unit SCA. Since the present embodiment differs from the first embodiment only regarding the processing in second step related to the sliding correlator unit SC, other explanations are omitted.

The sliding correlators SC1 to SCq compute correlation between the reception signal Sin of the head symbol and the primary synchronization code PSC and entire secondary synchronization codes SSC [1] to SSC [q] for each slot, at the first reception timing Tp1. Outputs A [1] to A [q] are further channel-estimated and phase-corrected by a channel estimation/phase correction unit CEPC, and the outputs A [1] to A [q] are stored in the memory MEM2 as a matrix A [I, J].

The timing group identification unit TGI1 performs an inphase addition on combinations of the elements of the matrix by the inphase addition unit CAP1. Based on the result of the inphase addition, the power averaging unit PWA calculates average values of the power. By selecting the maximum of the average values of the power, the judgement unit JP2 identifies the scrambling code group SCMG [g] and the second reception timing Tp2.

Thereafter, correlation is computed between the reception signal Sin and the scrambling codes GC [g,l] to GC [g,w] included in the scrambling code group SCMG [g] by the sliding correlator unit SCA. The result of this correlation computation is cumulatively added individually for the I- and Q-components over a plurality of symbols. Further, average values of the power are calculated, and by selecting the maximum of the average values of power, the judgement unit JP3 identifies a scrambling code GC [g,w].

Fig. 16 shows a functional block diagram of the processing performed between the sliding correlator unit and the timing group identification unit in the second embodiment. The correlation computation by the sliding correlator unit SCB is performed in the head symbol of the entire slots within a single frame for the I- and Q-components, by using the primary synchronization code PSC and the entire secondary synchronization codes SSC [u].

The channel estimation/phase correction unit CEPC performs channel estimation according to the result of correlation computation based on the primary synchronization code PSC and secondary synchronization code SSC [u]. Namely, the phase of the reception signal Sin, which is complex data that changes due to fading, for example, is estimated. In reality, this channel estimation may be performed by any of the following methods.

(1) A method utilizing the primary synchronization code PSC:

The correlation result of the primary synchronization code PSC is used as the channel estimation value.

(2) A method utilizing the primary synchronization code PSC and the secondary synchronization code SSC:

(a) The sum of the correlation result of the primary synchronization code PSC and the correlation result of the secondary synchronization code SSC of relevant codes identifying the individual scrambling code groups received at the same slot timing is used as the channel estimation value.
(b) The sum of the correlation result of the primary synchronization code PSC and the correlation result of the entire secondary synchronization codes SSC received at the same slot timing is used as the channel estimation value.
(c) The sum of the correlation result of the primary synchronization code PSC and the correlation results, which has a maximum amplitude, of the entire secondary synchronization codes SSC received at the same slot timing is used as the channel estimation value.

(3) A method utilizing the secondary synchronization code SSC:

(a) The sum of the correlation results of the secondary synchronization codes SSC (plural) of relevant codes identifying the individual scrambling code groups received at the same slot timing is used as the channel estimation value.
(b) The sum of the correlation results of the entire secondary synchronization codes SSC received at the same slot timing is used as the channel estimation value.
(c) The result of the correlation results of the entire secondary synchronization codes SSC received at the same slot timing which has a maximum amplitude is used as the channel estimation value.

By using this channel estimation result, phase correction is performed on the correlation computation result by the secondary synchronization code SSC [u].

Phase correction outputs are inphase-added in the inphase adder unit CAP1. After power calculation in the power averaging unit PWA, average values P [I, J] are calculated.

Such phase correction allows the effect of fading in the reception signal Sin to be removed and, further, since the signal after phase correction is inphase-added over one frame, the influence of noise can be further suppressed, thus providing high-quality demodulation.

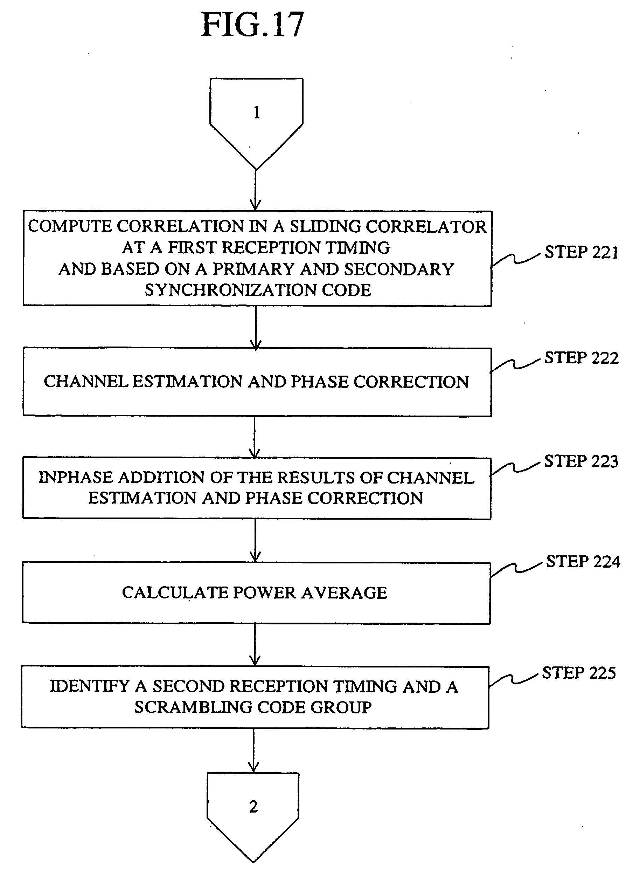

Fig. 17 shows a flowchart illustrating a second step corresponding to the first processing in the sliding correlator unit SCB and timing group identification unit TGI1 of Fig. 15 (corresponding to the processing in Fig. 12 of the first embodiment). The second step comprises the following five steps STEP221 to STEP225.

[STEP221] Correlation is computed by the sliding correlators SC1 to SCp between the reception signal Sin and the primary synchronization code PSC and secondary synchronization code SSC [u] at the first reception timing Tp1.

[STEP222] Channel estimation is performed by the channel estimation/phase correction unit CEPC based on the result of correlation computation of the primary and secondary synchronization codes, while the result of correlation computation with the secondary synchronization code is phase-corrected based on the result of channel estimation.

[STEP223] Inphase addition of the phase correction result is performed by the inphase addition unit CAP1 in the timing group identification unit TGI1.

[STEP224] Average values of the power of the result of phase correction are calculated by the power averaging unit PWA in the timing group identification TGI1.

[STEP225] The second reception timing Tp2 is identified by the judgement unit JP2 in the timing group identification unit TGI1, while the scrambling code group is identified.

[Third Embodiment]

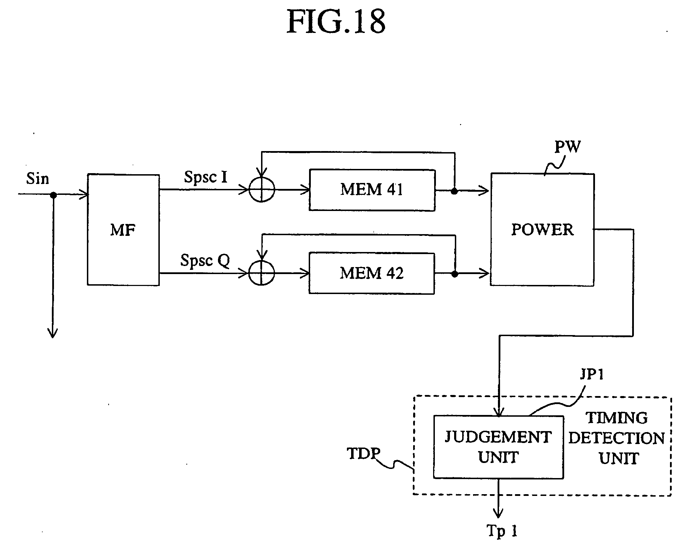

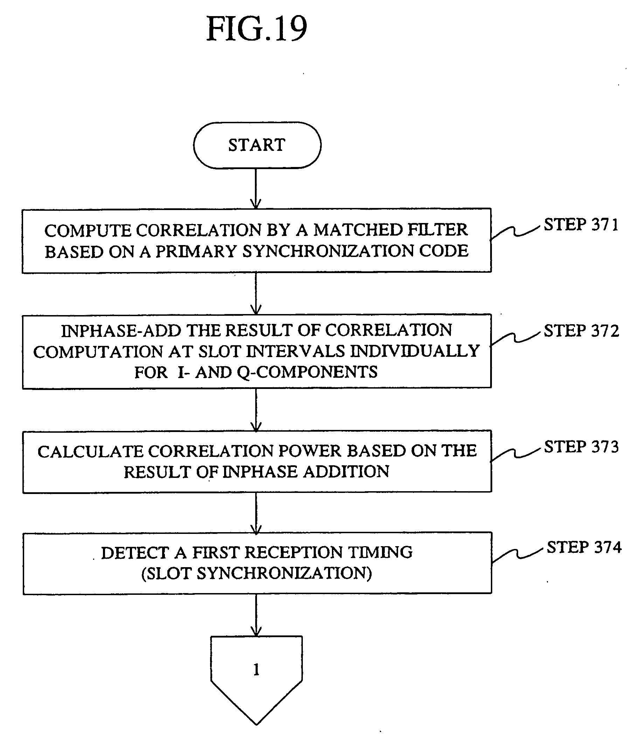

Figs. 18 and 19 are a flowchart illustrating the processing flow and a block diagram illustrating the structure of the receiver apparatus according to a third embodiment of the present invention, respectively.

In the third embodiment, a correlation output of a matched filter MF between the primary synchronization code PSC and a reception signal Sin is inphase-added individually for the I- and Q-components over at least one slot (including one slot) at slot intervals in a first step. Then, correlation power is determined based on the result of inphase addition, and finally a first reception timing (slot synchronization) is detected based on the correlation power.

In Fig. 18, the reception signal Sin comprising the I- and Q-components is inputted to the matched filter MF, which computes correlation between the reception signal Sin and the primary synchronization code PSC. As mentioned above, the matched filter MF is of complex type and its correlation output Spsc is also complex data, as in the case of processing in Figs. 2 and 15. In Fig. 18, I- and Q-components of the correlation output of the matched filter MF are denoted by SpscI and SpscQ, respectively.

Memories MEM41 and MEM42 of Fig. 18 can store a correlation output (I-component or Q-component) of one slot worth, and inphase addition is performed over at least one slot at slot intervals. The result of inphase addition is inputted to a power calculation unit PW, where the correlation power after inphase addition at slot intervals is calculated. A judgement unit JP1 judges the timing having the maximum correlation power as the first reception timing (slot synchronization) Tp1.

Fig. 19 shows a flowchart of a first step (corresponding to the processing in Fig. 11 of the first embodiment) in the third embodiment. The first step comprises the following four steps STEP371 to STEP374.

[STEP371] Correlation between the reception signal Sin and the primary synchronization code PSC is computed by the matched filter MF.

[STEP372] The correlation output (complex data) of the matched filter MF is separated into an I-component SpscI and a Q-component SpscQ at slot intervals and stored in the memories MEM41 and MEM42, and inphase addition is performed.

[STEP373] Correlation power for a one-slot length is calculated based on the inphase-addition result. In some cases, the inphase addition and the calculation of correlation power are performed by dividing an inphase addition section in STEP372, and, further, correlation power is averaged between individual sections.

[STEP374] After the correlation power following inphase addition is calculated, the judgement unit JP1 in the timing detection unit TDP detects the first reception timing (slot synchronization) Tp1.

Thus by introducing inphase addition in the first step of cell search, effects of noise can be suppressed, thereby allowing the first reception timing (slot synchronization) to be detected at high accuracy.

[Fourth Embodiment]

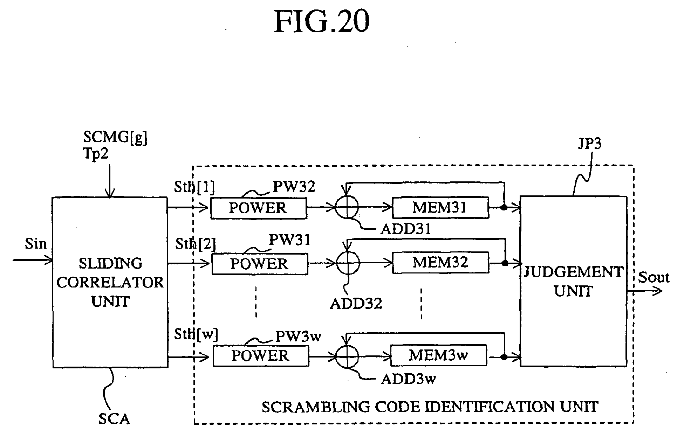

Fig. 20 shows a block diagram of the structure of the receiver apparatus according to a fourth embodiment of the present invention. The block diagram particularly shows the circuit portion of the sliding correlator unit SCA and downstream therefrom for the identification of the scrambling code.

In the fourth embodiment, the processes in the first to third embodiments up to the identification of the scrambling code group SCMG [g] can be used without any modification, and only the subsequent processes are changed.

The circuit in Fig. 20 comprises power calculation units PW31 to PW3w connected to the outputs of the sliding correlator unit SCA. Outputs of these power calculation units PW31 to PW3w are connected to adders ADD31 to ADD3w and memories MEM31 to MEM3w successively.

As in the first through third embodiments, concerning scrambling codes GC [g,i] (i=1-w) included in the scrambling code group SCMG [g], the sliding correlator unit SCA computes correlation between a reception signal Sin and the scrambling codes and a pilot pattern of the common pilot channel (CPICH).

Concerning the correlation output of the sliding correlator unit SCA, the power calculation units PW31 to PW3w calculate correlation power for each symbol or in a period of less than one symbol. The correlation power is integrated by the adders ADD31 to ADD3w and memories MEM31 to MEM3w over a plurality of symbols.

Integrated values of the correlation power for the length of a plurality of symbols are inputted to the judgement unit JP3, which compares the values and identifies a single scrambling code of GC [g,1] to GC[g,w].

During initial cell search, a frequency deviation between a signal from a base station and the local oscillation frequency of a mobile station is relatively large, and so the circuit shown in Fig. 20 in the present embodiment is used for the identification of the scrambling code in the third step. On the other hand, in the third step of periphery cell search, since the frequency deviation is relatively small, the circuit shown in Figs. 2 and 15 for the third step is used.

The circuit shown in Fig. 20 calculates an average after the I-component signal and Q-component signal following despreading are converted into power values. Accordingly, the circuit is not easily affected by frequency deviations between the base station and the oscillator in the mobile station, and is therefore suitable for initial cell search. On the other hand, the processing circuit in the third step shown in Figs. 2 and 15 performs the conversion into a power value after averaging individually for the I- and Q-component signals following despreading. Since this averaging cancels noise, the circuit shown in Figs. 2 and 15 is not easily affected by noise, and hence suitable for the processing in the third step of peripheral cell search.

Thus, by selectively using the circuit of the third step for initial and periphery cell search, the cell search error detection ratio can be reduced.

All publications, patents and patent applications cited herein are incorporated herein by reference in their entirety.

POTENTIAL FOR INDUSTRIAL APPLICATION

The present invention allows cell search to be performed at high accuracy by utilizing phase information in the result of correlation.

**Claims**

1. A receiver apparatus comprising:

   a first correlation means for computing correlation between a primary synchronization code common to a plurality of base stations and a reception signal; and
   a slot identification means for identifying slot synchronization by inphase-adding the result of correlation over a plurality of adjacent slots at slot intervals and calculating power.

2. A receiver apparatus comprising:

   a second correlation means for computing correlation between a secondary synchronization code comprising a plurality of codes for identifying a scrambling code group and a reception signal for each slot in synchronization with identified slot synchronization; and
   a first frame identification means for identifying frame synchronization and a scrambling code group by inphase-adding the result of correlation for each slot and calculating power.

3. A receiver apparatus comprising:

   a first correlation means for computing correlation between a primary synchronization code common to a plurality of base stations and a reception signal;
   a second correlation means for computing correlation between a secondary synchronization code comprising a plurality of codes for identifying a scrambling code group and the reception signal for each slot in synchronization with the slot synchronization identified by the first correlation means; and
   a second frame identification means for identifying frame synchronization and a scrambling code group by performing channel estimation and phase correction based on the result of correlation by the first correlation means and the result of correlation by the second correlation means, inphase-adding the phase-corrected correlation result for each slot, and calculating power.

4. A receiver apparatus comprising:

a second correlation means for computing correlation between a secondary synchronization code comprising a plurality of codes for identifying a scrambling code group and a reception signal for each slot in synchronization with identified slot synchronization; and

a third frame identification means for identifying frame synchronization and a scrambling code group by performing channel estimation and phase correction based on the result of correlation, inphase-adding the phase-corrected correlation result for each slot, and calculating power.

5. A receiver apparatus comprising:

a second correlation means for computing correlation between a secondary synchronization code comprising a plurality of codes for identifying a scrambling code group and a reception signal for each slot in synchronization with identified slot synchronization; and

a fourth frame identification means for identifying frame synchronization and a scrambling code group by generating a matrix of the number of codes in the secondary synchronization code times the number of slots in a single frame as a result of correlation, and adding together elements of the matrix for each known combination pattern representing each scrambling code group.

6. A receiver apparatus according to claim 5, wherein the fourth frame identification means identifies frame synchronization and the scrambling code group by inphase-adding the elements in adjacent slots in the matrix and calculating power.

7. A receiver apparatus comprising:

a third correlation means for computing correlation between a scrambling code of an identified scrambling code group and a reception signal at identified frame synchronization; and

a scrambling code identification means for identifying a scrambling code group by inphase-adding the result of correlation over a plurality of symbols and calculating power.

8. A receiver apparatus according to claim 7, wherein the scrambling code identification means identifies the scrambling code by, in an initial cell search, calculating power based on the result of correlation and adding the power over a plurality of symbols, and by, in a periphery cell search, inphase-adding the result of correlation over a plurality of symbols and calculating power.

# FIG.1

ONE FRAME (M SLOTS)

ONE SLOT (N SYMBOLS)

ONE SYMBOL (n CHIPS)

CPICH

PSCCH

SSCCH

SSC [j,1]　　SSC [j,2]　SSC [j,3]　・・・・・・・・・・・・・・・・・　SSC [j,M-1]　SSC [j,M]

{SCMG [1] , ... , SCMG [p] }　SCRAMBLING CODE GROUP

SCMG [j] ( j=1~p) { GC [j,1] , GC [j,2] ,..., GC [j,k] ,..., GC [j,w] }
SSC [j] j∈ {1, 2, 3, ... , q } {SSC [j,1] , SSC [j,2] , ... , SSC [j,.k] , ... , SSC [j,M] }

EP 1 241 817 A1

# FIG.2

# FIG.3

EP 1 241 817 A1

# FIG.4

16

# FIG.5

EP 1 241 817 A1

# FIG.6

# FIG.7

MEM 2

| SL | 1 + j j | 2 + j j | | M + j j |
|---|---|---|---|---|
| A [1] → | A [1, 1] | A [1, 2] | | A [1, M] |
| A [2] → | A [2, 1] | A [2, 2] | | A [2, M] |
| A [3] → | A [3, 1] | A [3, 2] | | A [3, M] |
| A [4] → | A [4, 1] | A [4, 2] | | A [4, M] |
| A [5] → | A [5, 1] | A [5, 2] | -------------- | A [5, M] |
| A [6] → | A [6, 1] | A [6, 2] | | A [6, M] |
| A [7] → | A [7, 1] | A [7, 2] | | A [7, M] |
| A [8] → | A [8, 1] | A [8, 2] | | A [8, M] |
| A [9] → | A [9, 1] | A [9, 2] | | A [9, M] |
| | ⋮ | | | ⋮ |
| A [q] → | A [q, 1] | A [q, 2] | -------------- | A [q, M] |

# FIG.8

ONE FRAME

SL1   SL2   SLM-1   SLM

LS

SC

SLIDING CORRELATOR UNIT

CORRELATOR SSC   CORRELATOR SSC   CORRELATOR SSC   CORRELATOR SSC

SSCI   SSCQ   SSCI   SSCQ   SSCI   SSCQ   SSCI   SSCQ

CAP

INPHASE-ADDITION UNIT

$\Sigma I$   $\Sigma Q$   $\Sigma I$   $\Sigma Q$

PWA

$| |^2$   $| |^2$   PWA 1

PWA 2

$\Sigma$

POWER AVERAGING UNIT

P [I, J]

EP 1 241 817 A1

# FIG.9

SCRAMBLING
CODE GROUP

| | | | | |
|---|---|---|---|---|
| 1 | P [1, 1] | P [1, 2] | | P [1, M] |
| 2 | P [2, 1] | P [2, 2] | | P [2, M] |
| 3 | P [3, 1] | P [3, 2] | | P [3, M] |
| 4 | P [4, 1] | P [4, 2] | | P [4, M] |
| 5 | P [5, 1] | P [5, 2] | | P [5, M] |
| 6 | P [6, 1] | P [6, 2] | ------------ | P [6, M] |
| 7 | P [7, 1] | P [7, 2] | | P [7, M] |
| 8 | P [8, 1] | P [8, 2] | | P [8, M] |
| 9 | P [9, 1] | P [9, 2] | | P [9, M] |
| | | | | |
| P | P [p, 1] | P [p, 2] | ------------ | P [p, M] |

# FIG.10

# FIG.11

```
        START
          │
          ▼
```

COMPUTE CORRELATION IN A MATCHED FILTER
USING A PRIMARY SYNCHRONIZATION CODE  ──── STEP 171

CALCULATE POWER (CORRELATION POWER)
OF THE RESULT OF CORRELATION COMPUTATION  ──── STEP 172

CALCULATE POWER AVERAGE BY THE SLOT  ──── STEP 173

DETECT A FIRST RECEPTION TIMING  ──── STEP 174

```
          │
          ▼
          1
```

# FIG.12

```
        ┌─────────┐
        │    1    │
        └───┐ ┌───┘
            \ /
             V
```

COMPUTE CORRELATION IN A SLIDING CORRELATOR AT A FIRST RECEPTION TIMING AND BASED ON A SECONDARY SYNCHRONIZATION CODE — STEP 181

STORE THE RESULT OF CORRELATION COMPUTATION IN MEMORY AND PERFORM INPHASE ADDITION — STEP 182

CALCULATE POWER AVERAGE — STEP 183

IDENTIFY A SECOND RECEPTION TIMING AND A SCRAMBLING CODE GROUP — STEP 184

```
        ┌─────────┐
        │    2    │
        └───┐ ┌───┘
            \ /
             V
```

# FIG.13

2

COMPUTE CORRELATION IN A SLIDING CORRELATOR AT A SECOND RECEPTION TIMING AND BASED ON A SCRAMBLING CODE IN A SLIDING CODE GROUP — STEP 191

ACCUMULATE THE RESULT OF CORRELATION COMPUTATION OVER A PLURALITY OF SYMBOLS INDIVIDUALLY THE I-/Q-COMPONENTS — STEP 192

CALCULATE POWER AND AVERAGE POWER — STEP 193

IDENTIFY A BASE STATION — STEP 194

END

# FIG.14

```
Active_num=0;                                          (1)
For  I=0:q;                                            (2)
  If  GRP_set [I] =1;                                  (3)
    Active_GRP [Active_num] =I;                        (4)
    Active_num++;                                      (5)
  Endif                                                (6)
Endfor                                                 (7)
I=0;                                                   (8)
do {                                                   (9)
  For  L=1:M                                           (10)
    Comp_Result [I, L] =0+j*0;                         (11)
      For  J=1:M                                       (12)
        Comp_Result [I, L] +=
        A [CG [Active_GRP [I], J], (J+L)  mod  q];     (13)
        Pow_Result [I, L] =Abs (Comp_Result [I, L]);   (14)
      End                                              (15)
  End                                                  (16)
  I++;                                                 (17)
} while (I<Active_num);                                (18)
```

# FIG.15

**FIG.16**

# FIG.17

```
        ┌──────────┐
        │    1     │
        └──────────┘
              │
              ▼
┌─────────────────────────────────────────┐
│ COMPUTE CORRELATION IN A SLIDING CORRELATOR│      STEP 221
│        AT A FIRST RECEPTION TIMING         │
│     AND BASED ON A PRIMARY AND SECONDARY   │
│           SYNCHRONIZATION CODE             │
└─────────────────────────────────────────┘
              │
              ▼
┌─────────────────────────────────────────┐
│   CHANNEL ESTIMATION AND PHASE CORRECTION  │      STEP 222
└─────────────────────────────────────────┘
              │
              ▼
┌─────────────────────────────────────────┐
│  INPHASE ADDITION OF THE RESULTS OF CHANNEL│      STEP 223
│       ESTIMATION AND PHASE CORRECTION      │
└─────────────────────────────────────────┘
              │
              ▼
┌─────────────────────────────────────────┐
│         CALCULATE POWER AVERAGE            │      STEP 224
└─────────────────────────────────────────┘
              │
              ▼
┌─────────────────────────────────────────┐
│  IDENTIFY A SECOND RECEPTION TIMING AND A  │      STEP 225
│         SCRAMBLING CODE GROUP              │
└─────────────────────────────────────────┘
              │
              ▼
        ┌──────────┐
        │    2     │
        └──────────┘
```

# FIG.18

# FIG.19

```
          ┌─────────────┐
          │    START    │
          └──────┬──────┘
                 │
                 ▼
  ┌──────────────────────────────────────┐        STEP 371
  │ COMPUTE CORRELATION BY A MATCHED FILTER│ ～～⌐
  │ BASED ON A PRIMARY SYNCHRONIZATION CODE│
  └──────────────────┬─────────────────────┘
                     │
                     ▼
  ┌──────────────────────────────────────┐        STEP 372
  │ INPHASE-ADD THE RESULT OF CORRELATION  │ ～～⌐
  │ COMPUTATION AT SLOT INTERVALS INDIVIDUALLY│
  │      FOR  I- AND Q-COMPONENTS          │
  └──────────────────┬─────────────────────┘
                     │
                     ▼
  ┌──────────────────────────────────────┐        STEP 373
  │ CALCULATE CORRELATION POWER BASED ON THE│ ～～⌐
  │      RESULT OF INPHASE ADDITION         │
  └──────────────────┬─────────────────────┘
                     │
                     ▼
  ┌──────────────────────────────────────┐        STEP 374
  │   DETECT A FIRST RECEPTION TIMING      │ ～～⌐
  │      (SLOT SYNCHRONIZATION)            │
  └──────────────────┬─────────────────────┘
                     │
                     ▼
              ┌───────────┐
              │     1     │
              └─────\───/──┘
                    \ /
```

# FIG.20

## INTERNATIONAL SEARCH REPORT

| International application No. |
|---|
| PCT/JP01/08832 |

| A. CLASSIFICATION OF SUBJECT MATTER |
|---|
| Int.Cl$^7$   H04J13/04 |

According to International Patent Classification (IPC) or to both national classification and IPC

| B.   FIELDS SEARCHED |
|---|
| Minimum documentation searched (classification system followed by classification symbols)<br>  Int.Cl$^7$   H04J13/00-13/06, H04B1/707-1/713 |

Documentation searched other than minimum documentation to the extent that such documents are included in the fields searched
Jitsuyo Shinan Koho (Y1,Y2)     1926-1996    Toroku Jitsuyo Shinan Koho(U) 1994-2001
Kokai Jitsuyo Shinan Koho(U)     1971-2001      Jitsuyo Shinan Toroku Koho(Y2)1996-2001

Electronic data base consulted during the international search (name of data base and, where practicable, search terms used)
  JOIS

### C.   DOCUMENTS CONSIDERED TO BE RELEVANT

| Category* | Citation of document, with indication, where appropriate, of the relevant passages | Relevant to claim No. |
|---|---|---|
| X | JP 11-196460 A (NTT Ido Tsushinmo K.K.),<br>21 July, 1999 (21.07.99),<br>Column 16, line 40 to column 18, line 12; Column 22, line 15 to Column 24, line 17; Column 26, line 45 to Column 29, line 9; Column 30, line 35 to Column 33, line 32; Figs. 15 to 24   (Family: none) | 1-8 |
| X | Tetsuro IMAI et al., "W-CDMA Cellular Houshiki ni okeru Cell Search Tokutei no Kaiseki", Denshi Joho Tsushin | 1-2,6-8 |
| Y | Gakkai Ronbunshi, 25 September, 2000 (25.09.00), Vol.J83-B, No.9, pp.1245-1257 | 3-5 |
| X | JP 11-8607 A (NEC Corporation),<br>12 January, 1999 (12.01.99), | 1-2,6-8 |
| Y | Full text; all drawings<br>& GB 2329307 A | 3-5 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>  14 December, 2001 (14.12.01) | Date of mailing of the international search report<br>  25 December, 2001 (25.12.01) |
|---|---|
| Name and mailing address of the ISA/<br>  Japanese Patent Office | Authorized officer |
| Facsimile No. | Telephone No. |

Form PCT/ISA/210 (second sheet) (July 1992)

## INTERNATIONAL SEARCH REPORT

| International application No. |
|---|
| PCT/JP01/08832 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Yukiko HANADA, et al., "W-CDMA ni okeru 3 Dankai Cell Search-hou wo mochiita Tsushin-chu Shuhen Cell Search Tokusei no Jikken Kekka", Denshi Joho Tsushin Gakkai Gijutsu  Kenkyu Houkoku RCS99-154, 26 November, 1999 (26.11.99), pp.91-97 | 1-8 |
| Y | Kenichi HIGUCHI et al., "W-CDMA ni okeru TSTD wo mochiita Toki no 3 Dankai Kosoku Cell Search Houshiki no Shitsunai Okugai Jikken Tokusei", Denshi Joho Tsushin Gakkai Gijutsu Kenkyu Houkoku RCS99-155, 26 November, 1999 (26.11.99), pp.99-105 | 1-8 |

Form PCT/ISA/210 (continuation of second sheet) (July 1992)